# EUROPÄISCHE PATENTSCHRIFT

(11) **EP 3 576 865 B1**
(45) Veröffentlichungstag und Bekanntmachung des Hinweises auf die Patenterteilung: **07.04.2021**
(21) Anmeldenummer: 18701776.9
(22) Anmeldetag: 02.02.2018
(51) Int. Cl.: B01D 53/94, F01N 3/10, F01N 3/20, B01J 23/42, B01J 23/44

(54) **KATALYSATOR ZUR REINIGUNG DER ABGASE VON DIESELMOTOREN**
CATALYST FOR CLEANING DIESEL ENGINE EXHAUST GASES
CATALYSEUR POUR LA PURIFICATION DES EFFLUENTS GAZEUX D'UN MOTEUR DIESEL

(30) Priorität: 03.02.2017 EP 17154563
(43) Veröffentlichungstag der Anmeldung: 11.12.2019
(73) Patentinhaber: Umicore AG & Co. KG, 63457 Hanau-Wolfgang (DE)
(72) Erfinder: REITH, Christoph, 97786 Motten (DE); FRIEDRICH, Birgit, 64853 Oetzberg (DE); HENGST, Christoph, 35510 Butzbach (DE)
(74) Vertreter: Muley, Ralf
(86) Internationale Anmeldenummer: PCT/EP2018/052600
(87) Internationale Veröffentlichungsnummer: WO 2018/141887

(56) Entgegenhaltungen:
- EP-A1- 2 653 681
- EP-A1- 2 674 584
- WO-A1-2014/072717
- DE-A1-102016 110 999
- GB-A- 2 492 175

## Beschreibung

Die vorliegende Erfindung betrifft einen Katalysator zur Reinigung der Abgase von Dieselmotoren, der mehrere Materialzonen aufweist.

Das Rohabgas von Dieselmotoren enthält neben Kohlenmonoxid CO, Kohlenwasserstoffen HC und Stickoxiden NOₓ einen relativ hohen Sauerstoffgehalt von bis zu 15 Vol.-%. Außerdem sind Partikelemissionen enthalten, die überwiegend aus Rußrückständen und gegebenenfalls organischen Agglomeraten bestehen und aus einer partiell unvollständigen Kraftstoffverbrennung im Zylinder des Motors herrühren.

Während zur Entfernung der Partikelemissionen Dieselpartikelfilter mit und ohne katalytisch aktive Beschichtung geeignet sind, können Stickoxide in Gegenwart von Sauerstoff mittels Ammoniak an einem SCR-Katalysator zu Stickstoff und Wasser umgesetzt werden.

Das als Reduktionsmittel verwendete Ammoniak kann durch Eindosierung einer Ammoniakvorläuferverbindung, wie beispielsweise Harnstoff, Ammoniumcarbamat oder Ammoniumformiat, in den Abgasstrang und anschließende Thermo- und Hydrolyse verfügbar gemacht werden. SCR-Katalysatoren sind in der Literatur umfangreich beschrieben. Es handelt sich in der Regel entweder um sogenannte Mischoxid-Katalysatoren, die insbesondere Vanadium, Titan und Wolfram enthalten oder um sogenannte Zeolith-Katalysatoren, die einen Metall-ausgetauschten, insbesondere kleinporigen Zeolithen umfassen. SCR-katalytisch aktive Materialien können auf Durchflusssubstraten oder auf Wandflussfiltern geträgert sein.

Kohlenmonoxid und Kohlenwasserstoffe werden durch Oxidation an einem geeigneten Oxidationskatalysator unschädlich gemacht. Auch Oxidationskatalysatoren sind in der Literatur umfangreich beschrieben. Es handelt sich beispielsweise um Durchflusssubstrate, die als wesentliche katalytisch aktive Bestandteile Edelmetalle, wie Platin und Palladium, auf hochoberflächigen, porösen, hochschmelzenden Oxiden, beispielsweise Aluminiumoxid, tragen.

Es sind auch bereits zonierte Oxidationskatalysatoren beschrieben, die in Fließrichtung des Abgases Materialzonen unterschiedlicher Zusammensetzung aufweisen, mit denen das Abgas nacheinander in Kontakt tritt.

So beschreiben US2010/257843, US2011/099975 und WO2012/079598 A1 zonierte Oxidationskatalysatoren, die Platin und Palladium enthalten. Auch die WO2011/057649 A1 beschreibt Oxidationskatalysatoren, wobei diese in gelayerten und gezonten Ausführungsformen verwendet werden können. Im Falle der gezonten Ausführungsformen weist die zweite Zone, d.h. die Zone mit denen das abströmende Abgas in direktem Kontakt steht, einen höheren Edelmetallgehalt auf, als die vordere Zone, die mit dem einströmenden Abgas in direktem Kontakt steht. Die Oxidationskatalysatoren gemäß WO2011/057649 A1 haben insbesondere die Aufgabe, für einen stromabwärts befindlichen SCR-Katalysator ein optimales Verhältnis von NO zu NO₂ einzustellen.

In den meisten Fällen werden die verschiedenen Katalysatoren so zu einem Abgasreinigungssystem kombiniert, dass ein Oxidationskatalysator motornah angeordnet ist und dann in Strömungsrichtung des Abgases ein Partikelfilter und ein SCR-Katalysator folgen, wobei der SCR-Katalysator auch auf dem Partikelfilter geträgert vorliegen kann, siehe z.B. EP2653681 A1.

Die Abgastemperaturen gegenwärtiger und zukünftiger Dieselmotoren der Abgasgesetzgebung Euro 6 und 6+ werden durch Kraftstoffeinsparungen zur Senkung des CO₂-Ausstosses immer niedriger. Es ist deshalb verschiedentlich vorgeschlagen worden, zumindest einen Teil der im Abgas enthaltenen Stickoxide mittels eines motornah angeordneten SCR-Katalysators umzusetzen und das Abgas erst danach durch einen Oxidationskatalysator, ein Partikelfilter und gegebenenfalls einen weiteren SCR-Katalysator zu führen.

Insbesondere in dieser Katalysatoranordnung ist es wichtig, Dieseloxidationskatalysatoren zur Verfügung zu haben, die wenig Distickstoffmonoxid produzieren und dennoch genügend Stickstoffdioxid für den folgenden SCR Katalysator zur Verfügung stellen.

Es wurde nun festgestellt, dass die nachstehend beschriebenen und definierten Katalysatoranordnungen diese Bedingungen erfüllen.

Die vorliegende Erfindung betrifft eine Katalysatoranordnung gemäss dem Anspruch 1.

In Ausführungsformen des Katalysators der erfindungsgemässen Katalysatoranlage sind Platin beziehungsweise Platin und Palladium in den Materialzonen A und B auf einem oder mehreren Trägeroxiden aufgebracht. Diese Trägeroxide sind vorteilhafterweise hochschmelzend, d.h. ihr Schmelzpunkt liegt mit ausreichendem Abstand über den beim bestimmungsgemäßen Betrieb des erfindungsgemäßen Katalysators auftretenden Temperaturen. Die Trägeroxide sind außerdem vorteilhafterweise hochoberflächig und weisen bevorzugt BET-Oberflächen von 50 bis 200 m²/g auf (bestimmt nach DIN 66132).

Die Trägeroxide in den Materialzonen A und B können gleich oder verschieden sein.

Geeignete Trägeroxide sind ausgewählt aus der Reihe bestehend aus Aluminiumoxid, dotiertes Aluminiumoxid, Siliziumoxid, Titandioxid, Ceroxid, Zirkonoxid und Mischoxiden aus einem oder mehreren davon.

Dotierte Aluminiumoxide sind beispielsweise Siliziumoxid-, Zirkoniumoxid- und/oder Titanoxid-dotierte Aluminiumoxide. Mit Vorteil wird Lanthanstabilisiertes Aluminiumoxid eingesetzt, wobei Lanthan in Mengen von 1 bis 10 Gew.-%, bevorzugt 3 bis 6 Gew.-%, jeweils berechnet als La₂O₃ und bezogen auf das Gewicht des stabilisierten Aluminiumoxides, verwendet wird.

Sofern Materialzone A Platin und Palladium enthält, so beträgt das Gewichtsverhältnis Pt : Pd ≥ 1, also insbesondere 20 : 1 bis 1 : 1. Beispiele sind 20 : 1, 12 : 1, 10 : 1, 7: 1, 6 :1, 4 :1, 3:1, 2:1, 1,5:1 und 1:1.

Sofern Materialzone B Platin und Palladium enthält, so beträgt das Gewichtsverhältnis Pt : Pd bevorzugt ≤ 3, also insbesondere 3 : 1 bis 1 :12. Beispiele sind 2:1, 1:1, 1:2 und 1:4.

In Ausführungsformen des Katalysators der erfindungsgemässen Katalysatoranlage umfasst Materialzone A Platin und ein Übergangsmetalloxid, wobei insbesondere Platin in einer Menge von 0,05 bis 4,0 Gew.-% und das Übergangsmetalloxid in Mengen von 0,5 bis 15 Gew.-%, jeweils bezogen auf das Gewicht der Materialzone A, vorliegt.

Das Übergangsmetalloxid ist in einer bevorzugten Ausführungsform CuₓO, worin 0 < x ≤ 2 ist.

Sofern das Übergangsmetalloxid CuₓO ist, so liegt es insbesondere in einer Menge von 0,5 bis 5 Gew.-% und Platin in einer Menge von 0,05 bis 2 Gew.-% vor, jeweils bezogen auf das Gewicht der Materialzone A.

In Ausführungsformen des Katalysators der erfindungsgemässen Katalysatoranlage umfasst Materialzone B ein Erdalkalimetall. Als Erdalkalimetall können Magnesium, Calcium, Strontium, Barium oder Mischungen von mindestens zwei dieser Metalle eingesetzt werden. Bevorzugt werden Strontium oder Barium oder Strontium und Barium eingesetzt.

Das Erdalkalimetall bzw. die Erdalkalimetalle liegen in der Regel in Form ihrer Oxide, Hydroxide oder Carbonate vor. Bevorzugt liegen sie in Form ihrer Oxide vor.

Das Erdalkalimetall wird mit Vorteil in einer Menge von 0,5 bis 5 Gew.-%, bezogen auf das Gewicht der Materialzone B und berechnet als MeO, wobei Me für das Erdalkalimetall steht, verwendet.

Wird Strontium verwendet, so liegt es besonders bevorzugt in einer Menge von 1 bis 3 Gew.-%, bezogen auf das Gewicht der Materialzone B, vor. Wird dagegen Barium verwendet, so liegt es besonders bevorzugt in einer Menge von 2,5 bis 4,5 Gew.-%, bezogen auf das Gewicht der Materialzone A, vor.

In Ausführungsformen des Katalysators der erfindungsgemässen Katalysatoranlage liegen die Materialzonen A und B unabhängig voneinander in Mengen von 25 bis 150 g/l, bezogen auf das Volumen des Tragkörpers, vor. Materialzone C enthält SCR-aktives Material, das heißt einen SCR-Katalysator.

Als SCR-Katalysator können prinzipiell alle in der SCR-Reaktion von Stickoxiden mit Ammoniak aktiven Katalysatoren verwendet werden, insbesondere solche, die dem Fachmann auf dem Gebiet der Autoabgaskatalyse als gebräuchlich bekannt sind. Dies schließt Katalysatoren vom Mischoxid-Typ ebenso ein, wie Katalysatoren auf Basis von Zeolithen, insbesondere von Übergangsmetall-ausgetauschten Zeolithen.

In Ausführungsformen des Katalysators der erfindungsgemässen Katalysatoranlage werden SCR-Katalysatoren, die einen kleinporigen Zeolithen mit einer maximalen Ringgröße von acht tetraedrischen Atomen und ein Übergangsmetall enthalten, verwendet. Solche SCR-Katalysatoren sind beispielsweise in EP 2 117 707 A1 und WO2008/132452 A2 beschrieben.

Daneben können aber auch groß- und mittelporige Zeolithe verwendet werden, wobei insbesondere solche vom Strukturtyp BEA in Frage kommen. So ist Eisen-BEA von besonderem Interesse.

Besonders bevorzugte Zeolithe gehören den Gerüsttypen BEA, AEI, CHA, KFI, ERI, LEV, MER oder DDR an und sind besonders bevorzugt mit Kobalt, Eisen, Kupfer oder Mischungen aus zwei oder drei dieser Metalle ausgetauscht.

Unter den Begriff Zeolithe fallen im Rahmen vorliegender Erfindung auch Molsiebe, die bisweilen auch als "zeolithähnliche" Verbindungen bezeichnet werden. Molsiebe sind bevorzugt, wenn sie einem der oben genannten Gerüsttypen angehören. Beispiele sind Silicaaluminiumphosphat-Zeolithe, die unter dem Begriff SAPO bekannt sind und Aluminiumphosphat-Zeolithe, die unter dem Begriff AIPO bekannt sind.

Auch diese sind insbesondere dann bevorzugt, wenn sie mit Kobalt, Eisen, Kupfer oder Mischungen aus zwei oder drei dieser Metalle ausgetauscht sind.

Bevorzugte Zeolithe bzw. Molsiebe sind weiterhin solche, die einen SAR (silica-to-alumina)-Wert von 2 bis 100, insbesondere von 5 bis 50, aufweisen.

Die Zeolithe bzw. Molsiebe enthalten Übergangsmetall insbesondere in Mengen von 1 bis 10 Gew.-%, insbesondere 2 bis 5 Gew.-%, berechnet als Metalloxid, also beispielsweise als Fe₂O₃ oder CuO.

Bevorzugte Ausführungsformen der vorliegenden Erfindung enthalten als SCR-Katalysatoren mit Kupfer, Eisen oder Kupfer und Eisen ausgetauschte Zeolithe oder Molsiebe vom Beta-Typ (BEA), Chabazit-Typ (CHA) oder vom Levyne-Typ (LEV). Entsprechende Zeolithe oder Molsiebe sind beispielsweise unter den Bezeichnungen ZSM-5, Beta, SSZ-13, SSZ-62, Nu-3, ZK-20, LZ-132, SAPO-34, SAPO-35, AIPO-34 und AIPO-35 bekannt, siehe etwa US 6,709,644 und US 8,617,474.

Erfindungsgemäß erstreckt sich Materialzone A ausgehend von Stirnfläche a oder ausgehend von Stirnfläche b des Tragkörpers auf 70 bis 100% seiner Länge L. In Ausführungsformen des Katalysators erstreckt sich Materialzone A auf 80 bis 100%, insbesondere auf 100% der Länge L des Tragkörpers.

In einer Ausführungsform geht Materialzone A von Stirnfläche a, in einer anderen Ausführungsform von Stirnfläche b des Tragkörpers aus.

In weiteren Ausführungsformen des Katalysators erstreckt sich Materialzone B auf 50% bis 70% der Länge L des Tragkörpers.

In weiteren Ausführungsformen des Katalysators erstreckt sich Materialzone C auf 30% bis 50% der Länge L des Tragkörpers.

In bevorzugten Ausführungsformen erstreckt sich Materialzone A über 100% der Länge L des Tragkörpers und befindet sich direkt auf dem Tragkörper. Die Materialzonen B und C befinden sich in diesem Fall auf der Materialzone A, wobei die Summe der Länge der Materialzonen B und C der Länge L des Tragkörpers entspricht. Es gilt also L = L_{B} + L_{C}, wobei L_{B} die Länge der Materialzone B und L_{C} die Länge der Materialzone C bedeutet.

Katalysatoren der erfindungsgemässen Katalysatoranlage können dadurch hergestellt werden, dass geeignete Tragkörper in an sich bekannter Weise mittels Beschichtungssuspensionen, sogenannten Washcoats, beschichtet werden. Zur Herstellung einer Beschichtungssuspension zur Herstellung der Materialzonen A oder B werden beispielsweise die ausgewählten Trägeroxide in Wasser suspendiert. Sodann werden Platin und/oder Palladium in den gewünschten Mengen unter Rühren in Form von geeigneten, wasserlöslichen Vorläuferverbindungen wie beispielsweise Palladiumnitrat oder Hexahydroxoplatinsäure zur Suspension hinzugegeben und gegebenenfalls durch Stellung des pH-Wertes und/oder durch Zugabe eines Hilfsreagenzes auf dem Trägermaterial fixiert.

Alternativ dazu kann das Edelmetall auch in Analogie zu dem in der EP 1 101 528 A2 beschriebenen Verfahren auf das Trägermaterial appliziert werden.

Analog wird zur Herstellung einer Beschichtungssuspension zur Herstellung der Materialzone C ein geeigneter SCR-Katalysator, gegebenenfalls unter Zugabe eines Binders in Wasser suspendiert.

Die so erhaltenen Suspensionen werden dann vermahlen und nach einem der herkömmlichen Beschichtungsverfahren auf den Tragkörper aufgebracht. Nach jedem Beschichtungsschritt wird das beschichtete Teil im heißen Luftstrom getrocknet und gegebenenfalls eine Kalzinierung.

Die oben genannten Vorläuferverbindungen, Hilfsreagenzien und Binder sind dem Fachmann geläufig.

Als Tragkörper kommen insbesondere sogenannte Wabenkörper aus Keramik, insbesondere Cordierit, oder aus Metall in Frage. Bevorzugt werden sogenannte Durchflusswabenkörper verwendet. Es sind aber auch Ausführungsformen denkbar, in denen Wandflussfilter als Tragkörper verwendet werden.

Die oben beschriebenen Katalysatoren eignen sich zur Reinigung der Abgase von Dieselmotoren. Sie sind insbesondere in der Lage, Kohlenmonoxid und Kohlenwasserstoffe zu Kohlendioxid und Wasser zu oxidieren. Darüber hinaus vermögen sie, Ammoniak in einer SCR-Reaktion mittels Stickoxiden zu oxiddieren und gegebenenfalls Ammoniak zwischenzuspeichern. Gleichzeitig ist die abströmseitige Zone in der Lage Stickstoffmonoxid zu Stickstoffdioxid zu oxidieren.

Sie werden bevorzugt so in ein Abgasreinigungssystem integriert, dass Abgas, das einen motornah angeordneten SCR-Katalysator passiert hat, an Stirnfläche a in den Katalysator eintritt und ihn an Stirnfläche b wieder verlässt.

Die vorliegende Erfindung betrifft somit eine Katalysatoranordnung, die nacheinander eine erste Vorrichtung zur Eindosierung von Ammoniak oder eines Ammoniak-Vorläufers, einen ersten SCR-Katalysator und einen oben beschriebenen Katalysator umfasst, wobei der Katalysator so angeordnet ist, dass seine Stirnfläche a in Richtung des ersten SCR-Katalysators zeigt.

Eine Vorrichtung zur Eindosierung von Ammoniak oder eines Ammoniak-Vorläufers ist insbesondere eine Vorrichtung zum Eindosieren einer wässrigen Lösung von Harnstoff. Solche Vorrichtungen sind dem Fachmann bekannt und können am Markt erworben werden.

Als erster SCR-Katalysator kommt insbesondere ein Durchflusssubstrat in Frage, das mit einem SCR-aktiven Material beschichtet ist. Als SCR-aktives Material kommen insbesondere neben allen oben beschriebenen SCR-Katalysatoren der Materialzone C auch Mischoxid-Katalysatoren insbesondere VWT Katalysatoren in Frage. VWT-Katalysatoren sind Katalysatoren auf Basis von V₂O₅, WO₃ und TiO₂.

Bevorzugt umfasst der erste SCR-Katalysator einen VWT-Katalysator oder mit Kupfer, Eisen oder Kupfer und Eisen ausgetauschte Zeolithe oder Molsiebe vom Beta-Typ (BEA), Chabazit-Typ (CHA) oder vom Levyne-Typ (LEV).

Die erfindungsgemäße Katalysatoranordnung umfasst in einer Ausführungsform einen Dieselpartikelfilter, der so angeordnet ist, dass er in Richtung der Stirnfläche b des oben beschriebenen Katalysators weist. Der Dieselpartikelfilter ist insbesondere ein Wandflussfilter.

Im Unterschied zu einem Durchflusssubstrat, bei dem sich an beiden Enden offene Kanäle parallel zwischen seinen beiden Enden erstrecken, sind die Kanäle im Wandflussfilter abwechselnd entweder am ersten oder am zweiten Ende gasdicht verschlossen. Gas, das an einem Ende in einen Kanal eintritt, kann somit den Wandflussfilter nur dann wieder verlassen, wenn es durch die Kanalwand in einen Kanal eintritt, der am anderen Ende offen ist. Die Kanalwände sind üblicherweise porös und weisen in unbeschichtetem Zustand beispielsweise Porositäten von 30 bis 80, insbesondere 50 bis 75% auf. Ihre durchschnittliche Porengröße beträgt in unbeschichtetem Zustand beispielsweise 5 bis 30 Mikrometer.

In der Regel sind die Poren des Wandflussfilters sogenannte offene Poren, das heißt sie haben eine Verbindung zu den Kanälen. Des Weiteren sind die Poren in der Regel untereinander verbunden. Dies ermöglicht einerseits die leichte Beschichtung der inneren Porenoberflächen und andererseits eine leichte Passage des Abgases durch die porösen Wände des Wandflussfilters.

Der Dieselpartikelfilter kann unbeschichtet sein. Bevorzugt umfasst er aber eine katalytisch aktive Beschichtung, die den Zündpunkt von Ruß herabsetzt und so das Abbrennen der gefilterten Rußpartikel erleichtert. Solche Beschichtungen umfassen beispielsweise auf Aluminiumoxid geträgerte Platingruppenmetalle wie insbesondere Platin und/oder Palladium. Auch mit einem SCR-Katalysator beschichtete Partikelfilter sind denkbar. In diesem Fall befindet sich vor dem Dieselpartikelfilter eine Vorrichtung zum Eindosieren einer wässrigen Lösung von Harnstoff.

In einer weiteren Ausführungsform umfasst die erfindungsgemäße Katalysatoranordnung einen zweiten SCR-Katalysator, der sich an den Dieselpartikelfilter anschließt.

Als zweiter SCR-Katalysator kann ebenfalls ein Durchflusssubstrat verwendet werden, das mit einem SCR-katalytisch aktiven Material beschichtet ist. Als SCR-katalytisch aktives Material kommen insbesondere alle oben beschriebenen SCR-Katalysatoren der Materialzone C in Frage. Bevorzugt umfasst der SCR-Katalysator einen VWT-Katalysator oder mit Kupfer, Eisen oder Kupfer und Eisen ausgetauschte Zeolithe oder Molsiebe vom Beta-Typ (BEA), Chabazit-Typ (CHA) oder vom Levyne-Typ (LEV). Auch vor dem zweiten SCR-Katalysator muss sich eine Vorrichtung zur Eindosierung von Ammoniak oder eines Ammoniak-Vorläufers, insbesondere eine Vorrichtung zum Eindosieren einer wässrigen Lösung von Harnstoff, befinden.

Eine Ausführungsform der erfindungsgemäßen Katalysatoranordnung umfasst somit nacheinander eine erste Vorrichtung zur Eindosierung von Ammoniak oder eines Ammoniak-Vorläufers, einen ersten SCR-Katalysator, einen oben beschriebenen Katalysator, ein Dieselpartikelfilter, eine zweite Vorrichtung zur Eindosierung von Ammoniak oder eines Ammoniak-Vorläufers und einen zweiten SCR-Katalysator.

Eine andere Ausführungsform der erfindungsgemäßen Katalysatoranordnung umfasst nacheinander eine erste Vorrichtung zur Eindosierung von Ammoniak oder eines Ammoniak-Vorläufers, einen ersten SCR-Katalysator, einen oben beschriebenen Katalysator, eine zweite Vorrichtung zur Eindosierung von Ammoniak oder eines Ammoniak-Vorläufers, einen mit einem SCR-Katalysator beschichteten Dieselpartikelfilter und einen zweiten SCR-Katalysator.

Um den Umsatz der Stickoxide im zweiten SCR-Katalysator zu verbessern kann es nötig sein, den Ammoniak in einer Menge zu dosieren, die etwa 10 bis 20% über der an sich benötigten, das heißt stöchiometrischen Menge liegt. Dadurch wird jedoch das Risiko einer höheren Sekundäremission insbesondere durch verstärkten Ammoniak-Schlupf erhöht. Da Ammoniak schon in geringer Konzentration stechend riecht und im Nutzfahrzeugbereich gesetzlich limitiert ist, muss der Ammoniak-Schlupf minimiert werden. Zu diesem Zweck sind sogenannte Ammoniak-Sperrkatalysatoren bekannt, die zur Oxidation von durchbrechendem Ammoniak in Strömungsrichtung des Abgases hinter einem SCR-Katalysator angeordnet sind. Ammoniak-Sperrkatalysatoren in verschiedenen Ausführungsformen sind beispielsweise in US 5,120,695, EP 1 399 246 A1 und EP 0 559 021 A2 beschrieben.

In einer weiteren Ausführungsform umfasst die erfindungsgemäße Katalysatoranordnung deshalb einen Ammoniak-Sperrkatalysator, der sich an den zweiten SCR-Katalysator anschließt.

Beispielsweise umfasst der Ammoniak-Sperrkatalysator SCR-aktives Material und ein oder mehrere Platingruppenmetalle, insbesondere Platin oder Platin und Palladium. Als SCR-katalytisch aktives Material kommen insbesondere alle oben beschriebenen SCR-Katalysatoren der Materialzone C in Frage.

In einer Ausführungsform der erfindungsgemäßen Katalysatoranordnung umfasst sie somit nacheinander eine erste Vorrichtung zur Eindosierung von Ammoniak oder eines Ammoniak-Vorläufers, einen ersten SCR-Katalysator, einen oben beschriebenen Katalysator, einen Dieselpartikelfilter, eine zweite Vorrichtung zur Eindosierung von Ammoniak oder eines Ammoniak-Vorläufers, einen zweiten SCR-Katalysator und einen Ammoniak-Sperrkatalysator.

Eine andere Ausführungsform der erfindungsgemäßen Katalysatoranordnung umfasst nacheinander eine erste Vorrichtung zur Eindosierung von Ammoniak oder eines Ammoniak-Vorläufers, einen ersten SCR-Katalysator, einen oben beschriebenen Katalysator, eine zweite Vorrichtung zur Eindosierung von Ammoniak oder eines Ammoniak-Vorläufers, einen mit einem SCR-Katalystor beschichteten Dieselpartikelfilter, einen zweiten SCR-Katalysator und einen Ammoniak-Sperrkatalysator.

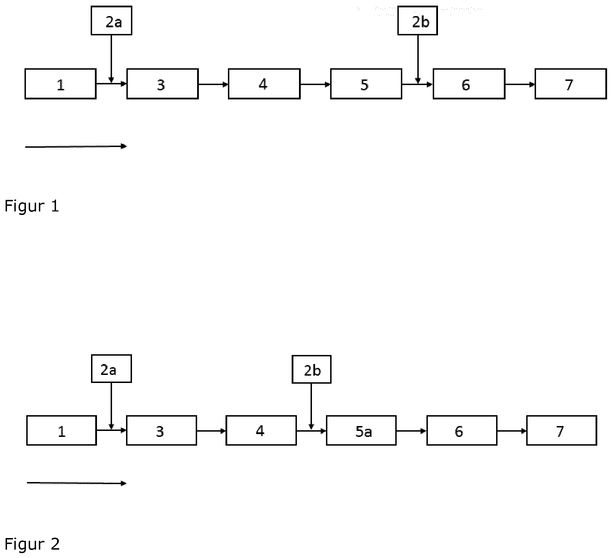

Figur 1 zeigt schematisch ein Beispiel einer erfindungsgemäßen Katalysatoranordnung. Abgas, das aus dem Motor (1) austritt, wird zuerst durch einen motornah angeordneten ersten SCR-Katalysator (3) geleitet. Vor dem ersten SCR-Katalysator (3) wird über eine erste Dosiervorrichtung (2a) wässrige Harnstofflösung eindosiert, die im Abgasstrom zu Ammoniak hydrolysiert wird. Abgas, das aus dem ersten SCR-Katalysator austritt, strömt sodann durch den oben beschriebenen Katalysator (4), durch das Partikelfilter (5) und schließlich durch einen weiter stromabwärts angeordneten zweiten SCR-Katalysator (6). Auch vor dem zweiten SCR-Katalysator (6) wird über eine zweite Dosiervorrichtung (2a) wässrige Harnstofflösung eindosiert, die im Abgasstrom zu Ammoniak hydrolysiert wird. Schließlich wird das Abgas noch durch den Ammoniak-Sperrkatalysator (7) geleitet, bevor es in die Atmosphäre entlassen wird. Der Pfeil bezeichnet die Strömungsrichtung des Abgases.

Figur 2 zeigt schematisch ein anderes Beispiel einer erfindungsgemäßen Katalysatoranordnung. Abgas, das aus dem Motor (1) austritt, wird zuerst durch einen motornah angeordneten ersten SCR-Katalysator (3) geleitet. Vor dem ersten SCR-Katalysator (3) wird über eine erste Dosiervorrichtung (2a) wässrige Harnstofflösung eindosiert, die im Abgasstrom zu Ammoniak hydrolysiert wird. Abgas, das aus dem ersten SCR-Katalysator austritt, strömt sodann durch den oben beschriebenen Katalysator (4), durch ein mit einem SCR-Katalysator beschichtetes Partikelfilter (5a) und schließlich durch einen weiter stromabwärts angeordneten zweiten SCR-Katalysator (6). In diesem Fall wird vor dem Partikelfilter (5a) über eine zweite Dosiervorrichtung (2a) wässrige Harnstofflösung eindosiert, die im Abgasstrom zu Ammoniak hydrolysiert wird. Schließlich wird das Abgas noch durch den Ammoniak-Sperrkatalysator (7) geleitet, bevor es in die Atmosphäre entlassen wird. Der Pfeil bezeichnet die Strömungsrichtung des Abgases.

### Beispiel 1

a) Ein handelsübliches rundes Durchflusssubstrat aus Cordierit der Abmessungen 10,5"x6,00" mit der Zelligkeit 400 cpsi und der Wandstärke 4 mil wurde ausgehend von einem Ende (entsprechend Stirnfläche a) auf 100% seiner Länge mit einem Washcoat beschichtet, der 75 g/L eines handelsüblichen , 0,67 g/L Pt und 0,11 g/L Pd enthielt. Das Pt:Pd-Gewichtsverhältnis betrug 6:1.
b) Das gemäß a) erhaltene beschichtete Substrat wurde über 50% seiner gesamte Länge ausgehend von der Stirnfläche b mit einem Washcoat beschichtet, der 50 g/L eines Si-dotierten Aluminiumoxids, 0,15 g/L einer üblichen wasserlöslichen Pt-Verbindung, sowie 0,30 g/L einer üblichen Pd-Verbindung enthielt. Das Pt:Pd-Gewichtsverhältnis betrug 1:2.
c) Das gemäß b) erhaltene beschichtete Substrat wurde über 50% seiner gesamte Länge ausgehend von der Stirnfläche a mit einem Washcoat beschichtet, der 200 g/L eines mit Kupfer ausgetauschten Zeolithen enthielt.

### Beispiel 2

a) Ein handelsübliches rundes Durchflusssubstrat aus Cordierit der Abmessungen 10,5"x6,00" mit der Zelligkeit 400 cpsi und der Wandstärke 4 mil wurde ausgehend von einem Ende (entsprechend Stirnfläche a) auf 100% seiner Länge mit einem Washcoat beschichtet, der 50 g/L eines handelsüblichen Aluminiumoxids, 0,39 g/L Pt und 0,10 g/L Pd enthielt. Das Pt:Pd-Gewichtsverhältnis betrug 4:1.
b) Das gemäß a) erhaltene beschichtete Substrat wurde über 50% seiner gesamte Länge ausgehend von der Stirnfläche b mit einem Washcoat beschichtet, der 70 g/L eines Si-dotierten Aluminiumoxids, 0,37 g/L einer üblichen wasserlöslichen Pt-Verbindung, sowie 0,37 g/L einer üblichen wasserlöslichen Pd-Verbindung enthielt. Das Pt:Pd-Gewichtsverhältnis betrug 1:1.
c) Das gemäß b) erhaltene beschichtete Substrat wurde über 50% seiner gesamte Länge ausgehend von der Stirnfläche a mit einem Washcoat beschichtet, der 160 g/L eines mit Eisen ausgetauschten Zeolithen enthielt.

## Patentansprüche

1. Katalysatoranordnung, die nacheinander eine erste Vorrichtung zur Eindosierung von Ammoniak oder eines Ammoniak-Vorläufers, einen ersten SCR-Katalysator und einen Katalysator umfasst, der einen Tragkörper mit einer Länge L, die sich zwischen einer ersten Stirnfläche a und einer zweiten Stirnfläche b erstreckt und auf dem Tragkörper angeordnete, unterschiedlich zusammengesetzte katalytisch aktive Materialzonen A, B und C umfasst, wobei
- Materialzone A Platin oder Platin und Palladium in einem Gewichtsverhältnis Pt : Pd von ≥ 1 enthält und sich ausgehend von Stirnfläche a oder ausgehend von Stirnfläche b auf 70 bis 100% der Länge L erstreckt, und
- Materialzone B Palladium oder Platin und Palladium enthält und sich ausgehend von Stirnfläche b auf einem Teil der Länge L erstreckt, und
- Materialzone C SCR-aktives Material enthält und sich ausgehend von Stirnfläche a auf einem Teil der Teil der Länge L erstreckt,
wobei Materialzone C über Materialzone A angeordnet ist und
wobei der Katalysator so angeordnet ist, dass seine Stirnfläche a in Richtung des ersten SCR-Katalysators zeigt.

2. Katalysatoranordnung gemäß Anspruch 1, **dadurch gekennzeichnet, dass** Materialzone A Platin oder Platin und Palladium im Gewichtsverhältnis von 20 :1 bis 1:1 enthält.

3. Katalysatoranordnung gemäß Anspruch 1 und/oder 2, **dadurch gekennzeichnet, dass** Materialzone B Palladium oder Platin und Palladium im Gewichtsverhältnis 3:1 bis 1:12 enthält.

4. Katalysatoranordnung gemäß einem oder mehreren der Ansprüche 1 bis 3, **dadurch gekennzeichnet, dass** Materialzone A Platin und ein Übergangsmetalloxid umfasst.

5. Katalysatoranordnung gemäß Anspruch 4, **dadurch gekennzeichnet, dass** Platin in einer Menge von 0,05 bis 4,0 Gew.-% und das Übergangsmetalloxid in Mengen von 0,5 bis 15 Gew.-% vorliegt, jeweils bezogen auf das Gewicht der Materialzone A.

6. Katalysatoranordnung gemäß Anspruch 4 und/oder 5, **dadurch gekennzeichnet, dass** das Übergangsmetalloxid CuₓO ist, worin 0 < x ≤ 2 bedeutet.

7. Katalysatoranordnung gemäß Anspruch 6, **dadurch gekennzeichnet, dass** CuₓO in einer Menge von 0,5 bis 5 Gew.-% und Platin in einer Menge von 0,05 bis 2,0 Gew.-% vorliegt, jeweils bezogen auf das Gewicht der Materialzone A.

8. Katalysatoranordnung gemäß einem oder mehreren der Ansprüche 1 bis 7, **dadurch gekennzeichnet, dass** Materialzone B ein Erdalkalimetall enthält

9. Katalysatoranordnung gemäß Anspruch 8, **dadurch gekennzeichnet, dass** das Erdalkalimetall in Materialzone B Strontium oder Barium oder Strontium und Barium ist.

10. Katalysatoranordnung gemäß einem oder mehreren der Ansprüche 1 bis 9, **dadurch gekennzeichnet, dass** Materialzone C als SCR-aktives Material einen kleinporigen Zeolithen mit einer maximalen Ringgröße von acht tetraedrischen Atomen, der ein Übergangsmetall enthält, enthält.

11. Katalysatoranordnung gemäß Anspruch 10, **dadurch gekennzeichnet, dass** der kleinporige Zeolith dem Gerüsttyp AEI, CHA, KFI, ERI, LEV, MER oder DDR angehört und mit Kobalt, Eisen, Kupfer oder Mischungen aus zwei oder drei dieser Metalle ausgetauscht ist.

12. Katalysatoranordnung gemäß einem oder mehreren der Ansprüche 1 bis 9, **dadurch gekennzeichnet, dass** Materialzone C als SCR-aktives Material einen Zeolithen vom Strukturtyp BEA, der ein Übergangsmetall enthält, enthält.

13. Katalysatoranordnung gemäß einem oder mehreren der Ansprüche 1 bis 12, **dadurch gekennzeichnet, dass** sich Materialzone B auf 30 bis 50% der Länge L des Tragkörpers erstreckt.

14. Katalysatoranordnung gemäß einem oder mehreren der Ansprüche 1 bis 13, **dadurch gekennzeichnet, dass** sich Materialzone C auf 50 bis 70% der Länge L des Tragkörpers erstreckt.

15. Katalysatoranordnung gemäß einem oder mehreren der Ansprüche 1 bis 14, **dadurch gekennzeichnet, dass** sie einen Dieselpartikelfilter umfasst, der so angeordnet ist, dass er in Richtung der Stirnfläche b des Katalysators weist.

16. Katalysatoranordnung gemäß Anspruch 15, **dadurch gekennzeichnet, dass** sie einen zweiten SCR-Katalysator umfasst der sich an den Dieselpartikelfilter anschließt.

17. Katalysatoranordnung gemäß Anspruch 16, **dadurch gekennzeichnet, dass** sich vor dem zweiten SCR-Katalysator eine zweite Vorrichtung zur Eindosierung von Ammoniak oder eines Ammoniak-Vorläufers befindet.

18. Katalysatoranordnung gemäß Anspruch 16 und/oder 17, **dadurch gekennzeichnet, dass** sie einen Ammoniak-Sperrkatalysator, der sich an den zweiten SCR-Katalysator anschließt, umfasst.

19. Katalysatoranordnung gemäß einem oder mehreren der Ansprüche 1 bis 18, **dadurch gekennzeichnet, dass** der erste SCR-Katalysator motornah angeordnet ist.

## Claims

1. A catalyst arrangement sequentially comprising a first device for the metering of ammonia or an ammonia precursor, a first SCR catalyst, and a catalyst with a carrier body having a length L extending between a first end surface a and a second end surface b; and
variously composed catalytically active material zones A, B and C arranged on the carrier body, wherein
- material zone A contains platinum, or platinum and palladium, in a weight ratio Pt: Pd of ≥ 1, and extends, starting from end face a or starting from end face b, over 70 to 100 % of length L, and
- material zone B contains palladium, or platinum and palladium, and extends from end face b over a portion of length L, and
- material zone C contains SCR-active material, and extends from end face a over a portion of a portion of length L,
wherein material zone C is arranged over material zone A and wherein the catalyst is arranged such that its end face a points in the direction of the first SCR catalyst.

2. Catalyst arrangement according to claim 1, **characterized in that** material zone A contains platinum, or platinum and palladium, in a weight ratio of from 20:1 to 1:1.

3. Catalyst arrangement according to claim 1 and/or 2, **characterized in that** material zone B contains palladium, or platinum and palladium, in a weight ratio of from 3:1 to 1:12.

4. Catalyst arrangement according to any one or more of claims 1 to 3, **characterized in that** material zone A comprises platinum and a transition metal oxide.

5. Catalyst arrangement according to claim 4, **characterized in that** platinum is present in an amount of from 0.05 to 4.0 % wt.% and the transition metal oxide in amounts of from 0.5 to 15 wt.%, in each case based on the weight of material zone A.

6. Catalyst arrangement according to claim 4 and/or 5, **characterized in that** the transition metal oxide is CuₓO, in which 0 < x ≤ 2.

7. Catalyst arrangement according to claim 6, **characterized in that** CuₓO is present in an amount of from 0.5 to 5 wt.% and platinum in an amount of from 0.05 to 2.0 wt. %, in each case based on the weight of material zone A.

8. Catalyst arrangement according to any one or more of claims 1 to 7, **characterized in that** material zone B contains an alkaline earth metal

9. Catalyst arrangement according to claim 8, **characterized in that** the alkaline earth metal in material zone B is strontium, or barium, or strontium and barium.

10. Catalyst arrangement according to any one or more of claims 1 to 9, **characterized in that** material zone C contains as an SCR-active material a small-pore zeolite having a maximum ring size of eight tetrahedral atoms and containing a transition metal.

11. Catalyst arrangement according to claim 10, **characterized in that** the small-pore zeolite belongs to the AEI, CHA, KFI, ERI, LEV, MER, or DDR scaffold type, and is exchanged with cobalt, iron, copper, or mixtures of two or three of such metals.

12. Catalyst arrangement according to any one or more of claims 1 to 9, **characterized in that** material zone C contains as an SCR-active material a zeolite of the structure type BEA, which contains a transition metal.

13. Catalyst arrangement according to any one or more of claims 1 to 12, **characterized in that** material zone B extends over 30 to 50 % of length L of the carrier body.

14. Catalyst arrangement according to any one or more of claims 1 to 13, **characterized in that** material zone C extends over 50 to 70 % of length L of the carrier body.

15. Catalyst arrangement according to any one or more of claims 1 to 14, **characterized in that** it comprises a diesel particulate filter, which is arranged in such a way that it faces in the direction of the end face b of the catalyst.

16. Catalyst arrangement according to claim 15, **characterized in that** it comprises a second SCR catalyst, which is attached to the diesel particulate filter.

17. Catalyst arrangement according to claim 16, **characterized in that** a second device for the metering of ammonia or an ammonia precursor is located upstream of the second SCR catalyst.

18. Catalyst arrangement according to claim 16 and/or 17, **characterized in that** it comprises an ammonia barrier catalyst, which is attached to the second SCR catalyst.

19. Catalyst arrangement according to any one or more of claims 1 to 18, **characterized in that** the first SCR catalyst is arranged close to the engine.

## Revendications

1. Agencement catalytique, qui comprend successivement un premier dispositif pour le dosage d'ammoniac ou d'un précurseur d'ammoniac, un premier catalyseur SCR et un catalyseur, qui comprend un corps support ayant une longueur L, qui s'étend entre une première face frontale a et une deuxième face frontale b, et
des zones matérielles A, B et C à activité catalytique de compositions différentes disposées sur le corps support,
- la zone matérielle A contenant du platine ou du platine et du palladium dans un rapport pondéral Pt: Pd ≥ 1 et s'étendant, partant de la face frontale a ou partant de la face frontale b, sur 70 à 100 % de la longueur L et
- la zone matérielle B contenant du palladium ou du platine et du palladium et s'étendant, partant de la face frontale b, sur une partie de la longueur L, et
- la zone matérielle C contenant un matériau actif en SCR (réduction catalytique sélective) et s'étendant, partant de la face frontale a, sur une partie de la partie de la longueur L,
la zone matérielle C étant disposée au-dessus de la zone matérielle A, et la catalyseur étant disposé de telle façon que sa face frontale a est orientée dans la direction du premier catalyseur SCR.

2. Agencement catalytique selon la revendication 1, **caractérisé en ce que** la zone matérielle A contient du platine ou du platine et du palladium dans un rapport pondéral de 20:1 à 1:1.

3. Agencement catalytique selon la revendication 1 et/ou 2, **caractérisé en ce que** la zone matérielle B contient du palladium ou du platine et du palladium dans un rapport pondéral de 3:1 à 1:12.

4. Agencement catalytique selon l'une ou plusieurs des revendications 1 à 3, **caractérisé en ce que** la zone matérielle A contient du platine et un oxyde de métal de transition.

5. Agencement catalytique selon la revendication 4, **caractérisé en ce que** le platine est présent en une quantité de 0,05 à 4,0 % en poids et l'oxyde de métal de transition est présent en des quantités de 0,5 à 15 % en poids, respectivement par rapport au poids de la zone matérielle A.

6. Agencement catalytique selon la revendication 4 et/ou 5, **caractérisé en ce que** l'oxyde de métal de transition est CuxO, où 0 < x ≤ 2.

7. Agencement catalytique selon la revendication 6, **caractérisé en ce que** CuxO est présent en une quantité de 0,5 à 5 % en poids et le platine est présent en une quantité de 0,05 à 2,0 % en poids, respectivement par rapport au poids de la zone matérielle A.

8. Agencement catalytique selon l'une ou plusieurs des revendications 1 à 7, **caractérisé en ce que** la zone matérielle B contient un métal alcalino-terreux.

9. Agencement catalytique selon la revendication 8, **caractérisé en ce que** le métal alcalino-terreux dans la zone matérielle B est le strontium ou le baryum ou le strontium et le baryum.

10. Agencement catalytique selon l'une ou plusieurs des revendications 1 à 9, **caractérisé en ce que** la zone matérielle C contient, comme matériau actif en SCR, une zéolithe à petits pores présentant une dimension maximale de cycle de huit atomes tétraédriques, qui contient un métal de transition.

11. Agencement catalytique selon la revendication 10, **caractérisé en ce que** la zéolithe à petits pores appartient au type de structure AEI, CHA, KFI, ERI, LEV, MER ou DDR et est échangée avec du cobalt, du fer, du cuivre ou des mélanges de deux ou trois de ces métaux.

12. Agencement catalytique selon l'une ou plusieurs des revendications 1 à 9, **caractérisé en ce que** la zone matérielle C contient, comme matériau actif en SCR, une zéolithe du type de structure BEA, qui contient un métal de transition.

13. Agencement catalytique selon l'une ou plusieurs des revendications 1 à 12, **caractérisé en ce que** la zone matérielle B s'étend sur 30 à 50 % de la longueur L du corps support.

14. Agencement catalytique selon l'une ou plusieurs des revendications 1 à 13, **caractérisé en ce que** la zone matérielle C s'étend sur 50 à 70 % de la longueur L du corps support.

15. Agencement catalytique selon l'une ou plusieurs des revendications 1 à 14, **caractérisé en ce qu'**il comprend un filtre à particules diesel qui est disposé de telle façon qu'il est orienté dans la direction de la face frontale b du catalyseur.

16. Agencement catalytique selon la revendication 15, **caractérisé en ce qu'**il comprend un deuxième catalyseur SCR relié au filtre à particules diesel.

17. Agencement catalytique selon la revendication 16, **caractérisé en ce qu'**un deuxième dispositif pour le dosage d'ammoniac ou d'un précurseur d'ammoniac se trouve en amont du deuxième catalyseur SCR.

18. Agencement catalytique selon la revendication 16 et/ou 17, **caractérisé en ce qu'**il comprend un catalyseur de blocage d'ammoniac relié au deuxième catalyseur SCR.

19. Agencement catalytique selon l'une ou plusieurs des revendications 1 à 18, **caractérisé en ce que** le premier catalyseur SCR est disposé à proximité du moteur.
